# FASCICULE DE BREVET EUROPEEN

(11) **EP 0 613 105 B1**
(45) Date de publication et mention de la délivrance du brevet: **28.01.1998**
(21) Numéro de dépôt: 94400386.2
(22) Date de dépôt: 23.02.1994
(51) Int. Cl.: G07F 7/10

(54) **Procédé de gestion de clés secrètes entre deux cartes à mémoire**
Verwaltungsverfahren von Geheimschlüsseln zwischen zwei Chipkarten
Management process of secret keys between two IC-cards

(30) Priorité: 25.02.1993 FR 9302152
(43) Date de publication de la demande: 31.08.1994
(73) Titulaire: FRANCE TELECOM, 75015 Paris (FR)
(72) Inventeur: Campana, Mireille, F-92140 Clamart (FR); Gilbert, Henri, F-91440 Bures sur Yvette (FR); Arditti, David, F-92140 Clamart (FR)
(74) Mandataire: Dubois-Chabert, Guy

(56) Documents cités:
- EP-A- 0 403 656
- EP-A- 0 422 230
- EP-A- 0 479 617
- EP-A- 0 500 245
- FR-A- 2 670 036

## Description

### Domaine de l'invention

L'invention concerne un procédé pour gérer des clés secrètes entre deux cartes à mémoire.

Actuellement les cartes à mémoire connaissent un fort développement en tant qu'outils d'authentification et de certification de données, du fait notamment de leur aptitude à stocker des données secrètes.

Le domaine de l'invention est celui de tous ces types de cartes à mémoire utilisées pour l'authentification et la certification de données, et destinées à être lues par un système informatique comportant un lecteur de cartes à mémoire. Ces cartes à mémoire peuvent être, par exemple, des cartes de terminaux dialoguant derrière un réseau commuté, telles que les cartes à mémoire de télécopieurs ou de distributeurs bancaires.

Ces cartes à mémoire seront aussi, dans la suite de la description, nommées plus simplement "cartes".

### Etat de la technique

Il est usuel, dans la plupart des systèmes informatiques à cartes, d'utiliser un serveur informatique central apte à lire des cartes à mémoire principales, dites "cartes mères". A ce serveur central, sont connectés une pluralité de terminaux informatiques aptes à lire des cartes à mémoire secondaires, dites "cartes filles". Ces terminaux sont alors connectés selon une architecture étoilée sur le serveur central. Selon cette architecture étoilée, le dialogue ne peut être établi qu'entre la carte mère et l'une des cartes filles. Deux cartes filles ne peuvent dialoguer, ensemble, c'est-à-dire échanger des informations entre elles.

Aussi, un système informatique ayant une telle architecture permet de réaliser des transactions sécurisées entre les cartes filles et les cartes mères, mais il ne permet pas de transaction sécurisée mutuelle entre deux cartes filles.

Un tel système informatique a également pour inconvénient de nécessiter, lors de l'établissement d'une clé de session commune entre deux cartes à mémoire, que chacune de ces cartes possède une clé secrète personnelle identique à la clé secrète de l'autre carte avec laquelle on cherche à établir une clé de session commune.

Un tel système informatique utilisant une carte microprocesseur, qui met en oeuvre un algorithme cryptographique, est décrit dans les demandes de brevet français publiées sous le numéro FR-2 601 795 et sous le numéro FR-2 469 760. Ces demandes de brevet décrivent, en effet, des dispositifs mettant en oeuvre un procédé de dialogue entre une carte mère et des cartes filles organisées en réseau étoilé. Les opérations réalisables par ces procédés ne peuvent donc avoir lieu qu'entre une carte mère et les cartes filles à l'aide des clés secrètes obtenues par diversification de la clé mère (clé secrète de la carte mère). Chaque clé secrète ainsi obtenue est le résultat d'un calcul faisant intervenir la clé mère et un paramètre propre à la carte fille avec laquelle la carte mère veut dialoguer. Un tel système informatique ne permet donc pas de mettre en oeuvre un procédé utilisant une clé de session commune entre deux cartes filles.

D'autres systèmes informatiques classiques sont décrits, notamment, dans le document EP-A-0 422 230.

Il est connu de ce document EP-A-0 422 230 un procédé de gestion de clés secrètes entre une première et une seconde cartes à mémoire dans lequel un premier code d'identité est mémorisé dans la première carte et un second code d'identité est mémorisé dans la seconde carte à mémoire, consistant en les phases suivantes :
. phase de personnalisation comprenant les étapes
   - d'écriture, dans chacune des cartes à mémoire, d'une même clé secrète de groupe;
   - d'écriture, dans chacune des cartes à mémoire, d'un algorithme de traitement de la clé secrète de groupe et des codes d'identité;
. une phase d'utilisation comprenant les étapes
   - de transmission du premier code d'identité vers la seconde carte à mémoire;
   - de transmission du second code d'identité vers la première carte à mémoire;
   - de calcul, par les algorithmes de traitement, d'une première et d'une seconde clés de session, respectivement dans la première et la seconde cartes à mémoire.

Un autre système informatique connu est décrit dans une notice commerciale du Centre commun de FRANCE TELECOM et de TDF, CCETT. Ce système informatique comporte une carte microprocesseur multiservice connue sous le nom commercial "Mimosa" ®. Une telle carte à microprocesseur multiservice utilise un algorithme à clé publique. Deux cartes de ce type sont aptes à s'authentifier mutuellement. Elles peuvent émettre et vérifier des signatures en utilisant l'algorithme à clé publique basé sur l'identité. Un tel algorithme à clé publique peut également permettre l'établissement d'une clé de session entre deux cartes. Cet algorithme met en oeuvre des opérations arithmétiques (multiplications, puissances, divisions) sur des nombres de plusieurs centaines de bits; cette complexité de calcul a pour conséquence de nécessiter , pour réaliser ces cartes, des composants haut de gamme qui sont actuellement encore très coûteux.

### Exposé de l'invention

Le but de la présente invention est de remédier aux inconvénients des systèmes informatiques décrits précédemment en proposant un procédé de gestion de clés secrètes dont la mise en oeuvre est simple et relativement peu coûteuse.

A cette fin, elle a pour objet un procédé de gestion de clés secrètes entre deux cartes à mémoire, dans lequel un premier code d'identité est mémorisé dans la première carte à mémoire, et un second code d'identité est mémorisé dans la seconde carte à mémoire. Ce procédé consiste en les phases suivantes :
- phase de personnalisation comprenant les étapes :
   - d'écriture, dans chacune des cartes à mémoire, d'un algorithme de traitement de la clé secrète de groupe et des codes d'identité;
   - d'écriture dans chacune des cartes à mémoire, d'une même clé secrète de groupe ;
- phase d'utilisation comprenant les étapes :
   - de transmission du premier code d'identité vers la seconde carte à mémoire ;
   - de transmission du second code d 'identité vers la première carte à mémoire ;
   - de transmission d'un même nombre aléatoire à chacune des cartes à mémoire ;
   - de calcul, par l'algorithme de traitement, d'une première et d'une seconde clés de session, respectivement dans la première et la seconde cartes à mémoire consistant, dans chacune des cartes à mémoire, en des étapes :
   - d'application d'un algorithme de diversification à partir des premier et second codes d'identité et de la clé secrète de groupe pour déterminer un nombre secret ;
   - d'application d'un algorithme de calcul de clé de session à partir du nombre aléatoire et du nombre secret.

Selon un mode de réalisation de l'invention, l'algorithme de diversification consiste :
- à déterminer un premier nombre secret à partir du premier code d'identité et de la clé secrète de groupe mémorisée dans chacune des cartes à mémoire,
- à déterminer un second nombre secret à partir du second code d'identité et de la clé secrète de groupe,
- à combiner par une opération commutative ces premier et second nombres secrets pour obtenir le nombre secret.
   Cette opération commutative peut être une addition.

Selon le mode de réalisation préféré de l'invention, les algorithmes de diversification et de calcul de clé de session de la première et de la seconde cartes à mémoire sont identiques, les clés de session obtenues pour la première et pour la seconde carte à mémoire étant alors identiques.

Ce procédé a donc pour avantage que deux cartes à mémoire sont aptes à dialoguer ensemble et à s'authentifier mutuellement par utilisation de leur clé de session lors d'une opération d'authentification.

En outre, seuls les codes d'identité étant transmis d'une carte vers l'autre, un intrus qui observerait les communications entre les deux cartes ne pourrait reconstituer la clé de session à l'issue du protocole, cet intrus ne pouvant connaître, par écoute, la clé secrète de groupe puisque celle-ci n'est pas transmise entre les cartes.

Ce procédé a également pour avantage qu'une autre carte ayant la même clé secrète de groupe que les cartes en communication ne peut déterminer la clé de session de ces cartes, puisque cette clé dépend des deux codes d'identités dont l'un réside nécessairement dans la carte.

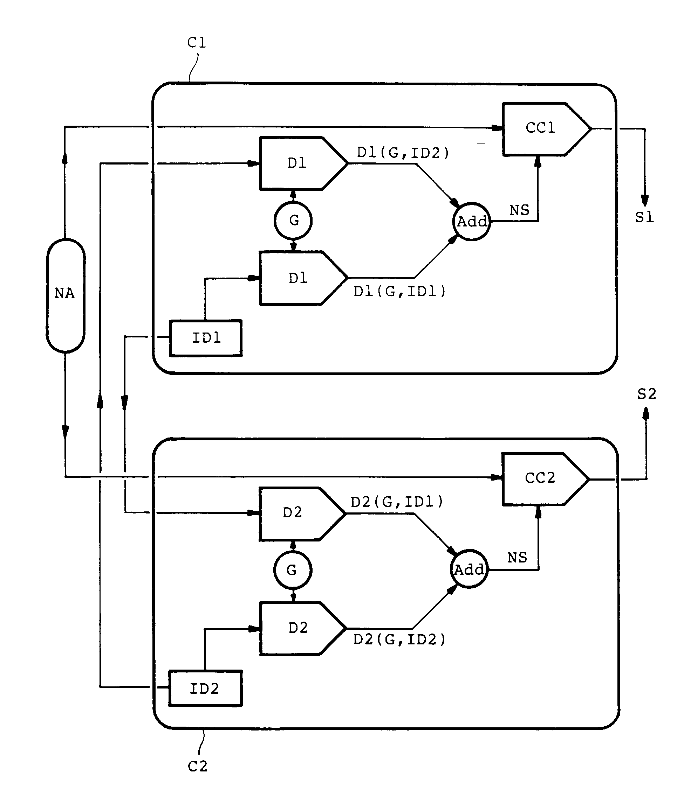

### Brève description du dessin

Les codes d'identité ID1 et ID2 n'étant pas secrets, ils peuvent être communiqués d'une carte à une autre. Sur la figure, le code d'identité ID1 est transmis à la carte C2 et le code d'identité ID2 est envoyé vers la carte C1.

En outre, sur chacune de ces cartes C1 et C2, sont écrits des algorithmes cryptographiques, notés respectivement, D1 et CC1, et D2 et CC2.

Ainsi, le code d'identité ID1 envoyé par la carte C1 vers la carte C2 est introduit dans l'algorithme de diversification D2 écrit dans la carte mémoire C2. L'algorithme de diversification D2 détermine, à partir du code d'identité ID1 ainsi reçu et de la clé secrète de groupe G, un premier nombre secret NS1. NS1 s'exprime sous la forme : NS1 = D2 (G, ID1).

Parallèlement, cet algorithme de diversification D2 détermine un second nombre secret NS2 à partir du code d'identité ID2 et de la clé secrète de groupe G. Ce second nombre secret s'exprime sous la forme : NS2 = D2 (G, ID2).

Lorsque les deux nombres secrets NS1 et NS2 ont été déterminés par l'algorithme D2, une fonction Add assure l'addition de ces deux nombres secrets NS1 et NS2. Le nombre secret résultant de cette addition est référencé NS.

L'algorithme de calcul de clé CC2 utilise alors ce nombre secret NS ainsi calculé et utilise également le nombre aléatoire NA fourni par le système informatique pour produire la clé de session S2 de la carte mémoire C2.

Ces algorithmes de diversification D2 et de calcul de clé CC2 ne sont pas décrits de façon plus précise car ils sont de type connu par l'homme de l'art et décrits dans les demandes de brevet français cités précédemment.

La figure unique, annexée, représente le schéma fonctionnel de réalisation d'une clé de session commune à deux cartes à mémoire.

### Exposé détaillé de modes de réalisation de l'invention

Sur la figure, on a représenté le schéma fonctionnel de l'opération de réalisation de la clé de session commune aux deux cartes mémoire C1 et C2. Pour une meilleure compréhension de l'invention, la clé de session réalisée à partir de la carte C1 sera référencée S1 et la clé de session réalisée à partir de la carte C2 sera référencée S2. Pour réaliser de telles clés de session S1 et S2, le système informatique fournit à chacune des cartes C1 et C2 un nombre aléatoire NA. En outre, chacune des cartes appartient à un groupe, c'est-à-dire que chacune des cartes appartient à un ensemble de cartes ayant à communiquer entre elles. De façon plus précise, un groupe représente l'ensemble des correspondants ayant à communiquer entre eux et faisant cette communication deux à deux de manière protégée vis-à-vis des autres correspondants dudit groupe et vis-à-vis des correspondants extérieurs audit groupe. Aussi, outre ce nombre aléatoire NA reçu du système, chacune de cartes mémoires C1 et C2 possède une clé secrète de groupe, référencée G. Cette clé secrète de groupe est identique pour chacune des cartes d'un même groupe.

De plus, chacune des cartes de ce groupe (à savoir les cartes C1 et C2 sur la figure) possède un code d'identité personnel, référencé ID1 pour la carte C1 et ID2 pour la carte C2.

Toutes les opérations décrites pour la carte C2, sont réalisées de façon symétrique par la carte C1.

Ainsi, l'algorithme de diversification D1 écrit dans la carte C1 calcule le premier nombre secret NS1 = D1(G, ID1) en utilisant le code d'identité ID1 lui appartenant et en utilisant la clé secrète de groupe G. Ce même algorithme de diversification D1 calcule, d'autre part, le nombre secret NS2 = D1(G, ID2) en utilisant le code d'identité ID2 reçu de la carte C2 et en utilisant la clé secrète de groupe G. Tout comme dans la carte C2, ces nombres secrets NS1 et NS2 sont additionnés par une fonction Add (ou toute opération commutative) pour donner le nombre secret NS. L'algorithme de calcul de clé CC1 calcule alors la clé de session S1 à partir du nombre aléatoire NA reçu du système informatique et du nombre secret NS calculé de la façon décrite précédemment.

Pour une meilleure compréhension de l'invention, les algorithmes de diversification ont été précédemment notés D1 et D2 ; ils sont cependant identiques l'un et l'autre. Il en est de même pour les algorithmes de calcul de clé CC1 et CC2 qui sont identiques l'un et l'autre. On comprendra bien évidemment que, si les algorithmes D1 et D2 et CC1 et CC2 sont, respectivement, identiques, les clés de session référencées S1 pour la clé de session obtenue par la carte C1 et S2 pour la clé de session obtenue par la carte C2 sont également identiques l'une et l'autre. On a ainsi une clé de session commune aux deux cartes C1 et C2.

On comprendra de plus, à la lecture de cette description, que toute carte en possession de la clé de groupe secrète G peut établir une clé de session commune avec n'importe quelle autre carte du même groupe, c'est-à-dire possédant également la clé secrète G.

## Revendications

1. Procédé de gestion de clés secrètes entre une première et une seconde cartes à mémoire (C₁,C₂) dans lequel un premier code d'identité (ID1) est mémorisé dans la première carte à mémoire et un second code d'identité (ID2) est mémorisé dans la seconde carte à mémoire,
consistant en les phases suivantes :
• phase de personnalisation comprenant les étapes
- d'écriture dans chacune des cartes à mémoire, d'une même clé secrète de groupe (G);
- d'écriture, dans chacune des cartes à mémoire, d'un algorithme de traitement de la clé secrète de groupe et des codes d'identité ;
• une phase d'utilisation comprenant les étapes
- de transmission du premier code d'identité (ID1) vers la seconde carte à mémoire (C2) ;
- de transmission du second code d 'identité (ID2) vers la première carte à mémoire (C1) ;
- de transmission d'un même nombre aléatoire (NA) à chacune des cartes à mémoire ;
- de calcul, par les algorithmes de traitement, d'une première et d'une seconde clés de session (S1, S2), respectivement dans la première et la seconde cartes à mémoire consistant, dans chacune des cartes à mémoire en des étapes:
- d'application d'un algorithme de diversification (D1, D2) à partir des premier et second codes d'identité (ID1, ID2) et de la clé secrète de groupe pour déterminer un nombre secret (NS);
- d'application d'un algorithme de calcul de clé de session (CC1, CC2) à partir du nombre aléatoire (NA) et du nombre secret (NS).

2. Procédé selon la revendication 1, caractérisé en ce que l'algorithme de diversification consiste :
- à déterminer un premier nombre secret (NS1) à partir du premier code d'identité (ID1) et de la clé secrète de groupe mémorisée dans chacune des cartes à mémoire,
- à déterminer un second nombre secret (NS2) à partir du second code d'identité (ID2) et de la clé secrète de groupe,
- à combiner, par une opération commutative, ces premier et second nombres secrets pour obtenir le nombre secret (NS).

3. Procédé selon la revendication 2, caractérisé en ce que l'opération commutative effectuée sur les premier et second nombres secrets (NS1, NS2) dans l'algorithme de diversification est une addition.

4. Procédé selon l'une quelconque des revendications 1 et 2, caractérisé en ce que les algorithmes de diversification (D1, D2) et de calcul (CC1, CC2) de clé de session de la première et de la seconde cartes à mémoire sont identiques, les clés de session obtenues pour la première et pour la seconde carte à mémoire étant alors identiques.

## Claims

1. Process for the control of secret keys between a first and a second smart card (C1) and (C2), in which a first identity code (ID1) is stored in the first smart card and a second identity code (ID2) is stored in the second smart card,
consisting of the following phases:
a personalization phase involving the stages:
- writing into each of the smart cards the same group secret key (G),
- writing into each of the smart cards an algorithm for processing the group secret key and identity codes;
a use phase involving the stages:
- of transmitting the first identity code (ID1) to the second smart card (C2),
- of transmitting the second identity code (ID2) to the first smart card (C1),
- of transmitting a random number (NA) to each of the smart cards,
- of calculating, by processing algorithms, a first and a second session keys (S1, S2), respectively in the first and the second smart cards,
consisting in each of the smart cards of the stages of:
- applying a diversification algorithm (D1, D2) based on the first and second identity codes (ID1, ID2) and the group secret key for determining a secret number (NS),
- applying an algorithm for calculating the session key (CC1, CC2) on the basis of the random number (NA) and the secret number (NS).

2. Process according to claim 1, characterized in that the diversification algorithm comprises:
- determining a first secret key (NS1) on the basis of the first identity code (ID1) and the group secret key stored in each of the smart cards,
- determining a second secret number (NS2) on the basis of the second identity code (ID2) and the group secret key,
- combining, by a commutative operation, said first and second secret numbers to obtain the secret number (NS).

3. Process according to claim 2, characterized in that the commutative operation performed on the first and second secret numbers (NS1, NS2) in the diversification algorithm is an addition.

4. Process according to any one of the claims 1 and 2, characterized in that the diversification (D1, D2) algorithm and the algorithm for calculating (CC1, CC2) the session key of the first and second smart cards are identical, the session keys obtained for the first and second smart cards then being identical.

## Patentansprüche

1. Verwaltungsverfahren von Geheimschlüsseln zwischen einer ersten und einer zweiten Chipkarte (C₁, C₂), bei dem ein erster Identitätscode (ID1) in der ersten Chipkarte gespeichert ist und ein zweiter Identitätscode (ID2) in der zweiten Chipkarte gespeichert ist,
gebildet durch die folgenden Phasen:
. eine Personalisationsphase, folgende Schritte umfassend:
- Einschreiben desselben Gruppengeheimschlüssels in jede der Chipkarten;
- Einschreiben eines Verarbeitungsalgorithmus des Gruppengeheimschlüssels und der Identitätscodes in jede der Chipkarten;
. eine Benutzungsphase, folgende Schritte umfassend:
- Übertragen des ersten Identitätscodes (ID1) zur zweiten Chipkarte (C2);
- Übertragen des zweiten Identitätscodes (ID2) zur ersten Chipkarte (C1);
- Übertragen von ein und derselben Zufallszahl (NA) zu jeder der Chipkarten;
- Berechnen, durch die Verarbeitungsalgorithmen, eines ersten und eines zweiten Sessions- bzw. Sitzungsschlüssels (S1, S2), jeweils in der ersten und der zweiten Chipkarte, in jeder der Chipkarten bestehend aus den Schritten:
- Anwendung eines Diversifikationsalgorithmus (D1, D2) aufgrund des ersten und zweiten Identitätscodes (ID1, ID2) und des Gruppengeheimschlüssels, um eine Geheimzahl (NS) zu bestimmen;
- Anwendung eines Sitzungs- bzw. Sessionsschlüssel-Berechnungsalgorithmus (CC1, CC2) aus der Zufallszahl (NA) und der Geheimzahl (NS).

2. Verfahren nach Anspruch 1, dadurch gekennzeichnet, daß der Diversifikationsalgorithmus darin besteht:
- eine erste Geheimzahl (NS1) festzulegen aufgrund des ersten Identitätscodes (ID1) und des in jeder Chipkarte gespeicherten Gruppengeheimschlüssels,
- eine zweite Geheimzahl (NS1) festzulegen aufgrund des zweiten Identitätscodes (ID2) und des Gruppengeheimschlüssels,
- durch eine kommutative Operation die erste und die zweite Geheimzahl zu kombinieren, um die Geheimzahl (NS) zu erhalten.

3. Verfahren nach Anspruch 2, dadurch gekennzeichnet, daß die kommutative Operation, durchgeführt mit der ersten und zweiten Geheimzahl (NS1, NS2), in dem Diversifikationsalgorith-mus eine Addition ist.

4. Verfahren nach einem der Ansprüche 1 und 2, dadurch gekennzeichnet, daß der Diversifikationsalgorithmus (D1, D2) und der Sessionsschlüssel-Berechnungsalgorithmus (CC1, CC2) der ersten und der zweiten Chipkarte identisch sind, wobei die für die erste und die zweite Chipkarte erhaltenen Sessionsschlüssel dann identisch sind.
